# FASCICULE DE BREVET EUROPEEN

(11) **EP 1 782 024 B1**
(45) Date de publication et mention de la délivrance du brevet: **05.04.2017**
(21) Numéro de dépôt: 05793419.2
(22) Date de dépôt: 27.07.2005
(51) Int. Cl.: G01D 11/28, G01D 13/26

(54) **INDICATEUR DE VITESSES A DEUX AIGUILLES INDICATRICES D'UNE VITESSE EFFECTIVE ET D'UNE VITESSE DE REFERENCE**
ZWEIPUNKTTACHOMETER ZUR ANZEIGE EINER EFFEKTIVEN GESCHWINDIGKEIT UND EINER REFERENZGESCHWINDIGKEIT
TWO-POINTER SPEEDOMETER FOR INDICATING AN EFFECTIVE SPEED AND A REFERENCE SPEED

(30) Priorité: 11.08.2004 FR 0408822
(43) Date de publication de la demande: 09.05.2007
(73) Titulaire: Johnson Controls Technology Company, Holland, MI 49423 (US)
(72) Inventeur: FOURNIER, Joël, F-95000 Cergy (FR); VOILLOT, Stéphane, F-98500 Courdimanche (FR)
(74) Mandataire: Gevers & Orès
(86) Numéro de dépôt international: PCT/FR2005/001957
(87) Numéro de publication internationale: WO 2006/024747

(56) Documents cités:
- DE-A1- 10 026 860
- DE-A1- 10 145 036
- JP-A- 55 071 985
- US-A- 4 380 043
- US-A1- 2002 108 555

## Description

L'invention concerne un indicateur de vitesses à aiguille, avec une deuxième aiguille indicatrice d'une vitesse de référence.

La planche de bord d'un véhicule automobile comprend généralement un tableau de bord, situé face au conducteur, qui comprend un ensemble d'indicateurs, notamment un indicateur de vitesses, qui peut être à aiguille.

L'aiguille de l'indicateur de vitesses, commandée et entraînée en rotation par un moteur, ou mouvement, s'étend généralement devant un support sérigraphié portant des caractères d'indication (des graduations et des valeurs de vitesses, notamment), formant cadran de vitesses. Le support des caractères d'indication est nommé face avant. L'indicateur de vitesses est monté dans un réhaut d'habillage servant de protection et de cache et supportant une vitre de protection.

Il est devenu commun de désirer faire apparaître une vitesse de référence sur le cadran de vitesses, que ce soit la vitesse de référence d'un régulateur de vitesse ou d'un limiteur de vitesse, par exemple. Le conducteur peut ainsi lire, sur le même indicateur, la vitesse effective du véhicule et la vitesse sur laquelle il a réglé son moteur, ou celle qu'il ne doit pas dépasser, dans ces cas-là. Cette lecture doit pouvoir être effectuée de jour comme de nuit.

L'art antérieur propose des indicateurs de vitesses dans lesquels une série de diodes électroluminescentes (LED) a été placée à la périphérie du cadran, la LED correspondant à la vitesse de référence étant allumée. Disposer un tel nombre de LED est toutefois très coûteux et augmente considérablement le prix du tableau de bord. La précision de l'indication d'une vitesse, discrétisée du fait de la juxtaposition des LED, est en outre assez pauvre.

Le document WO 01/92047 propose un indicateur comportant une première aiguille indicatrice de la vitesse effective du véhicule, s'étendant devant la face avant, et une deuxième aiguille, coudée, indicatrice d'une vitesse de référence et située à l'arrière de la face avant, dont on ne voit que l'extrémité de la portion coudée en périphérie du cadran. L'indicateur comprend une première boîte à lumière, au fond de laquelle sont montées, sur une première carte de circuit imprimé, des LED d'éclairage du cadran pointé par l'aiguille indicatrice de la vitesse effective, et une deuxième boîte à lumière, dans laquelle s'étend l'aiguille coudée, le cadran pointé par cette aiguille étant éclairé par des LED montées sur une deuxième carte de circuit imprimé située à l'arrière de la deuxième boîte à lumière, et portant également un moteur d'entraînement des deux aiguilles. Cet indicateur est toutefois très volumineux, du fait de la profondeur requise pour l'ensemble des deux aiguilles et des moyens d'entraînement et d'éclairage. Par ailleurs, les aiguilles ne sont pas éclairées.

La présente invention vise à proposer un indicateur de vitesses à aiguille, avec une deuxième aiguille indicatrice d'une vitesse de référence, qui soit à la fois compact et peu coûteux.

A cet effet, l'invention concerne un indicateur de vitesses, comprenant une face avant supportant un cadran, une première aiguille indicatrice de la vitesse effective, entraînée en rotation devant le cadran, une deuxième aiguille indicatrice d'une vitesse de référence, entraînée en rotation derrière le cadran et comportant une portion d'extrémité visible en périphérie du cadran, et des moyens d'éclairage des deux aiguilles et du cadran, indicateur caractérisé par le fait que les moyens d'éclairage comprennent une source d'éclairage unique commune aux deux aiguilles et au cadran.

Grâce à l'invention, on peut proposer un indicateur de vitesses compact et peu coûteux, dont les deux aiguilles sont éclairées.

Selon l'invention, le support de cadran est monté sur un conduit de lumière monté dans une première boîte à lumière, la première aiguille indicatrice est conductrice de lumière, la deuxième aiguille indicatrice est conductrice de lumière, montée dans une deuxième boîte à lumière à l'arrière de la première boîte à lumière, une carte de circuit imprimé, sur laquelle est montée la source d'éclairage, étant prévue à l'arrière de la deuxième aiguille.

Dans ce cas, il n'est donc prévu qu'une seule carte de circuit imprimé.

De préférence, les deux aiguilles sont entraînées en rotation par deux arbres d'entraînement concentriques et entraînés en rotation par un unique moteur monté sur la carte de circuit imprimé.

De préférence encore, la deuxième aiguille comprend un bras, dont la première extrémité comprend un moyeu de réception de son arbre d'entraînement et la deuxième extrémité comprend une portion coudée, dont l'extrémité est visible en périphérie du cadran.

Avantageusement, dans ce cas, le bras de la deuxième aiguille comprend, à proximité de sa première extrémité, au moins un pan incliné qui réfléchit partiellement la lumière émise par la source d'éclairage dans le bras et la laisse passer partiellement vers le conduit de lumière, par un évidement ménagé dans la première boîte à lumière.

Avantageusement encore, le conduit de lumière est agencé pour diffuser la lumière issue de la source d'éclairage, pour éclairer le cadran, et pour laisser passer une partie de cette lumière pour l'éclairage de la première aiguille.

L'invention s'applique particulièrement bien à un indicateur de vitesses d'un tableau de bord de véhicule automobile, mais la demanderesse n'entend pas limiter la portée de ses droits à cette seule application. Il peut notamment s'agir d'un indicateur de vitesses de tout engin de locomotion.

L'invention sera mieux comprise à l'aide de la description suivante de la forme de réalisation préférée de l'indicateur de l'invention, en référence au dessin annexé, sur lequel :
- la figure 1 représente une vue partielle en coupe de l'indicateur de l'invention et
- la figure 2 représente une vue de face de l'indicateur de la figure 1.

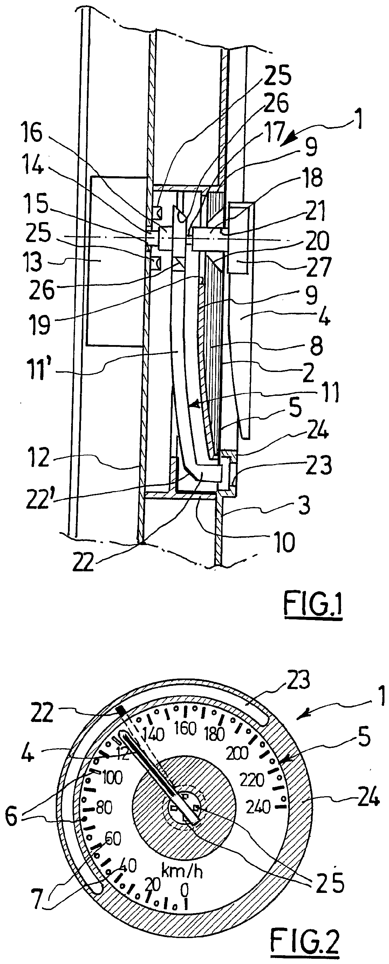

En référence à la figure 1, l'indicateur de vitesses 1 ici décrit est un indicateur de vitesses du tableau de bord d'un véhicule automobile. Il fait partie d'un ensemble d'indicateurs contenus dans le tableau de bord, qui comporte en l'espèce une vitre de protection tenue par un réhaut d'habillage, non représentés. Le réhaut sert également de cache aux indicateurs. Il comprend une partie formant un conduit globalement transversal à la vitre de protection, s'étendant vers l'arrière et assurant la liaison avec une face avant 2, support des cadrans des indicateurs. Il comporte une autre partie, appelée fond de réhaut, ou façade 3, couvrant la face avant 2 en dehors des indicateurs ; la façade 3 forme en quelque sorte un masque au travers duquel on ne voit que les indicateurs, par des évidements prévus à leurs positions.

L'indicateur 1 comprend une première aiguille 4, indicatrice de la vitesse effective du véhicule, de forme globalement rectiligne, montée rotative devant la face avant 2, cette dernière portant des caractères d'indication sérigraphiés formant un cadran de vitesses 5. En référence à la figure 2, les caractères d'indication comportent ici des graduations 6, formant une échelle de comptage de vitesses, réparties en arc de cercle sur la face avant 2, et des nombres 7, assignant des valeurs de vitesses aux graduations 6. En l'espèce, le cadran 5 est gradué de 0 Km/h à 240 Km/h. Des graduations 6 sont sérigraphiées tous les 5 Km/h, des chiffres tous les 20 Km/h. L'arc de cercle sur lequel sont portées les graduations 6 forme les trois quarts d'un cercle.

Une lentille 8, formant conduit de lumière, est montée à l'arrière de la face avant 2. Cette lentille 8 est en l'espèce en forme de portion de disque, dont la périphérie suit le contour de l'arc de cercle défini par les graduations 6 du cadran 5, le quart de disque de la face avant 2 correspondant à la portion non graduée du cadran 5 étant supporté par une simple paroi opaque. La lentille 8 est montée dans une première boîte à lumière 9. A l'arrière de cette première boîte à lumière 9, derrière sa paroi de fond, est montée rotative, dans une deuxième boîte à lumière 10, une deuxième aiguille 11. Cette deuxième boîte à lumière 10 forme une cavité sous les trois quarts de disque gradués du cadran 5.

Par avant et arrière, on entend dans la direction du conducteur et dans la direction opposée, par rapport au tableau de bord.

Derrière la deuxième aiguille 11, s'étend une carte de circuit imprimé 12, parallèle à la face avant 2, qui commande et alimente l'indicateur 1, en l'espèce l'ensemble des indicateurs du tableau de bord du véhicule. A l'arrière de cette carte de circuit imprimé 12 est monté un moteur 13 d'entraînement des aiguilles 4, 11, qui comporte un arbre 14, ci-après dénommé deuxième arbre 14, traversant vers l'avant la carte de circuit imprimé 12 par un évidement 15 prévu à cet effet, perpendiculairement à la carte 12, et emmanché dans un moyeu 16 de la deuxième aiguille 11, situé à une première extrémité de cette aiguille 11.

Le moteur d'entraînement 13 comporte un autre arbre 17, ci-après dénommé premier arbre 17, s'étendant concentriquement au deuxième arbre 14, qui traverse la deuxième aiguille 11 pour être emmanché dans un moyeu 18 de la première aiguille 4, ce dernier traversant la paroi de fond de la première boîte à lumière 9, la lentille 8 et la face avant 2, par des évidements 19, 20, 21, respectivement, prévus à cet effet. Le moyeu 18 de la première aiguille 4 est solidaire d'une première extrémité de la première aiguille 4, à laquelle il est globalement perpendiculaire, la seconde extrémité de cette aiguille 4 indiquant des valeurs sur le cadran 5.

Les deux arbres 14, 17 sont entraînés en rotation indépendamment l'un de l'autre par le moteur 13, afin de permettre à la première aiguille 4 d'indiquer les valeurs de la vitesse effective du véhicule, à la deuxième aiguille 11 d'indiquer la valeur d'une vitesse de référence.

La deuxième aiguille 11 comporte, à partir de sa première extrémité, un bras 11', qui comporte, à sa seconde extrémité, une portion coudée 22, dont l'extrémité s'étend sensiblement perpendiculairement à la face avant 2. Le bras 11' s'étend à l'arrière de la première boîte à lumière 9, globalement parallèlement à la face avant 2, légèrement courbé vers l'avant, depuis sa première extrémité jusqu'à sa seconde extrémité, pour suivre, décalé par rapport à elle, la forme de la lentille 8, convexe, jusqu'à sa périphérie, au-delà de laquelle l'aiguille 11 comprend sa portion coudée 22.

L'extrémité de la portion coudée 22 de la deuxième aiguille 11 est visible par le conducteur du véhicule grâce à un évidement 23 en arc de cercle pratiqué sur la façade 3. En l'espèce, la façade 3 comprend, autour du cadran 5, une portion annulaire 24 surélevée par rapport à la face avant 2 qui délimite le cadran 5, dans un but esthétique. C'est le long de cette portion annulaire 24 qu'est percé l'évidement 23. Cet évidement 23 forme ici un demi-cercle situé angulairement entre 40 Km/h et 200 Km/h sur le cadran 5. Une vitesse de référence, comprise entre ces vitesses, peut être indiquée par la position de l'extrémité de la portion coudée 22 de la deuxième aiguille 11 dans l'évidement 23, de façon visible par le conducteur.

Du côté avant de la carte de circuit imprimé 12, autour de son évidement 15 de passage des arbres 14, 17 du moteur d'entraînement 13, est montée une source d'éclairage constituée, en l'espèce, d'une pluralité de LED 25, ici au nombre de quatre. Ces LED 25 sont agencées pour, lorsqu'elles sont allumées, éclairer à la fois l'extrémité de la portion coudée 22 de la deuxième aiguille 11, le cadran 5 et la première aiguille 4.

En effet, la deuxième aiguille 11 comprend une matière transparente conductrice de lumière. Les LED 25 étant situées à l'arrière de la deuxième boîte à lumière 10, elles éclairent directement la deuxième aiguille 11, dont le bras 11' comprend, au niveau de sa première extrémité, qui est située à proximité des LED 25, des pans inclinés 26 qui réfléchissent partiellement la lumière émise par les LED 25 dans le bras 11' de l'aiguille 11 en direction de sa deuxième extrémité. L'aiguille 11 étant conductrice de lumière, la lumière est guidée jusqu'à sa portion coudée 22, qui comprend également un pan 22' réfléchissant la lumière vers son extrémité ; l'extrémité de la portion coudée 22 de la deuxième aiguille 11 est donc lumineuse, si les LED 25 sont allumées, pour le conducteur qui la voit par l'évidement 23 de la façade 3. Les quatre LED 25 étant régulièrement espacées, diamétralement opposées deux par deux, la deuxième aiguille 11 est d'une épaisseur suffisante pour recevoir un éclairage uniforme de la part des LED 25 quelle que soit sa position angulaire.

En outre, l'évidement 19, du fond de la première boîte à lumière 9, de passage du moyeu 18 de la première aiguille 4, est élargi afin de laisser passer une partie de la lumière émise par les LED 25 dans la lentille 8. La lumière émise par les LED 25 se propage vers cet évidement 19, directement et/ou à travers la deuxième aiguille 11, qui est transparente, la lumière se propageant dans cette aiguille 11 étant, comme rappelé ci-dessus, partiellement réfléchie par les pans inclinés 26 et guidée dans son bras 11', partiellement transmise vers la lentille 8. Le cadran 5 est ainsi éclairé par la lumière diffusée dans la lentille 8 tout en étant contenue par la première boîte à lumière 9. En l'espèce, la face avant 2 est translucide et sérigraphiée de façon opaque, les graduations 6 et les nombres 7 étant dessinés par lacune d'encre à leur contour ou par une encre translucide. Ainsi, les graduations 6 et les nombres 7 se voient de jour, puisqu'ils ne sont pas de la même couleur que l'encre opaque sérigraphiée sur la face avant 2, et de nuit, si les LED 25 sont allumées, puisqu'ils sont alors éclairés par l'arrière et par transparence par les LED 25, via la lentille 8.

Enfin, l'évidement 20, de la lentille 8, de passage du moyeu 18 de la première aiguille 4, est de forme tronconique, avec son petit diamètre du côté arrière. Ainsi, la lumière qui traverse l'évidement 19 du fond de la première boîte à lumière 9 est réfléchie par le pan incliné de l'évidement tronconique 20 dans la lentille 8 pour y être diffusée et éclairer le cadran 5 et transmise vers l'avant en direction de la première aiguille 4. Cette aiguille 4 possède, au droit de l'évidement tronconique 20, un capot 27, qui collecte la lumière provenant de l'évidement tronconique 20 et la guide dans le corps allongé de l'aiguille 4. Le corps de l'aiguille 4 comprend une matière conductrice de lumière et translucide, et est ainsi éclairé.

Grâce à l'invention, on obtient un indicateur de vitesses à aiguille 1 qui comprend une aiguille 11 indicatrice d'une vitesse de référence, entraînée par un moteur 13 et donc précise quant à l'indication de la vitesse, qui est compact et peu coûteux. Une seule carte de circuit imprimé 12 est nécessaire, comprenant une source d'éclairage 25 qui éclaire simultanément la portion visible de l'aiguille 11 indicatrice d'une vitesse de référence, le cadran 5 et l'aiguille 4 indicatrice de la vitesse effective du véhicule.

Il va de soi que le cadran 5 pourrait être agencé différemment, par exemple éclairé sur l'ensemble de sa surface, avec les caractères d'indication 6, 7, sérigraphiés de façon opaque, apparaissant en ombres chinoises.

Le moteur d'entraînement 13 a été décrit comme un moteur unique à deux arbres coaxiaux 14, 17, mais on pourrait prévoir deux moteurs avec deux arbres désaxés, ou un unique moteur avec deux arbres désaxés, les diverses trajectoires d'indication étant adaptées à cette configuration ; avec un désaxage minimal, il est notamment possible d'avoir l'illusion que les aiguilles ont le même centre de rotation, par exemple en utilisant une deuxième aiguille dont l'épaisseur est plus grande que celle de l'évidement par lequel on la voit, impliquant qu'on ne sache pas qu'en fait on ne voit pas la même partie de cette aiguille au fur et à mesure de sa rotation.

## Revendications

1. Indicateur de vitesses, comprenant une face avant (2) supportant un cadran (5), une première aiguille (4) indicatrice de la vitesse effective, entraînée en rotation devant le cadran (5), une deuxième aiguille (11) indicatrice d'une vitesse de référence, entraînée en rotation derrière le cadran (5) et comportant une portion d'extrémité (22) visible en périphérie du cadran (5), et des moyens (25) d'éclairage des deux aiguilles (4, 11) et du cadran (5), indicateur **caractérisé en ce que** les moyens d'éclairage comprennent une source d'éclairage unique (25) commune aux deux aiguilles (4, 11) et au cadran (5), et **en ce que** le support (2) de cadran (15) est monté sur un conduit de lumière (8) monté dans une première boîte à lumière (9), la première aiguille indicatrice (4) est conductrice de lumière, la deuxième aiguille indicatrice (11) est conductrice de lumière, montée dans une deuxième boîte à lumière (10) à l'arrière de la première boîte à lumière (9), une carte de circuit imprimé (12), sur laquelle est montée la source d'éclairage (25), étant prévue à l'arrière de la deuxième aiguille (11).

2. Indicateur de vitesses selon la revendication 1, dans lequel les deux aiguilles (4, 11) sont entraînées en rotation par deux arbres d'entraînement (14, 17) concentriques et entraînés en rotation par un unique moteur (13) monté sur la carte de circuit imprimé (12).

3. Indicateur de vitesses selon l'une des revendications 1 à 2, dans lequel la deuxième aiguille (11) comprend un bras (11'), dont la première extrémité comprend un moyeu (16) de réception de son arbre d'entraînement (14) et la deuxième extrémité comprend une portion coudée (22), dont l'extrémité est visible en périphérie du cadran (5).

4. Indicateur de vitesses selon la revendication 3, dans lequel le bras (11') de la deuxième aiguille (11) comprend, à proximité de sa première extrémité, au moins un pan incliné (26) qui réfléchit partiellement la lumière émise par la source d'éclairage (25) dans le bras (11') et la laisse passer partiellement vers le conduit de lumière (8), par un évidement (19) ménagé dans la première boîte à lumière (9).

5. Indicateur de vitesses selon la revendication 4, dans lequel le conduit de lumière (8) est agencé pour diffuser la lumière issue de la source d'éclairage (25), pour éclairer le cadran (5), et pour laisser passer une partie de cette lumière pour l'éclairage de la première aiguille (4).

6. Indicateur de vitesses selon la revendication 5, dans lequel le conduit de lumière comprend une lentille convexe conductrice de lumière (8), comportant un évidement tronconique (20) de diffusion d'une partie de la lumière émise par la source d'éclairage (25) dans la lentille (8), et laissant passer une partie de cette lumière vers la première aiguille (4).

7. Indicateur de vitesses selon l'une des revendications 1 à 6, dans lequel la source d'éclairage comprend au moins une diode électroluminescente (LED) (25).

8. Indicateur de vitesses selon l'une des revendications 1 à 7, qui est un indicateur de vitesses d'un tableau de bord de véhicule automobile (1).

## Patentansprüche

1. Geschwindigkeitsanzeigevorrichtung, umfassend eine Vorderseite (2), die eine Skala (5) hält, einen ersten, die Effektivgeschwindigkeit anzeigenden Zeiger (4), der rotatorisch vor der Skala (5) angetrieben wird, einen zweiten, die Referenzgeschwindigkeit anzeigenden Zeiger (11), der rotatorisch hinter der Skala (5) angetrieben wird und einen Endbereich (22) aufweist, der an der Peripherie der Skala (5) sichtbar ist, sowie Beleuchtungsmittel (25) der beiden Zeiger (4, 11) und der Skala (5), wobei die Anzeigevorrichtung **dadurch gekennzeichnet ist, dass** die Beleuchtungsmittel eine einzige gemeinsame Beleuchtungsquelle (25) für die beiden Zeiger (4, 11) und die Skala (5) umfassen, und dass die Halterung (2) der Skala (15) auf einem Lichtleiter (8) montiert ist, der in einer ersten Lichtwanne (9) montiert ist, wobei der erste anzeigende Zeiger (4) lichtleitend ist, wobei der zweite anzeigende Zeiger (11) lichtleitend ist, wobei in einer zweiten Lichtwanne (10) hinter der ersten Lichtwanne (9) eine gedruckte Schaltungsplatine (12) montiert ist, auf welcher die Beleuchtungsquelle (25) montiert ist, welche hinter dem zweiten Zeiger (11) vorgesehen ist.

2. Geschwindigkeitsanzeigevorrichtung nach Anspruch 1, bei welcher die beiden Zeiger (4, 11) rotatorisch mittels zweier Antriebswellen (14, 17) angetrieben werden, die konzentrisch sind und rotatorisch mittels eines einzigen Motors (13) angetrieben werden, der auf der gedruckten Schaltungsplatine (12) montiert ist.

3. Geschwindigkeitsanzeigevorrichtung nach einem der Ansprüche 1 bis 2, bei welcher der zweite Zeiger (11) einen Arm (11') umfasst, dessen erstes Ende eine Aufnahmenabe (16) seiner Antriebswelle (14) umfasst, und dessen zweites Ende einen gebogenen Bereich (22) umfasst, dessen Ende an der Peripherie der Skala (5) sichtbar ist.

4. Geschwindigkeitsanzeigevorrichtung nach Anspruch 3, bei welcher der Arm (11') des zweiten Zeigers (11) in der Nähe seines ersten Endes mindestens eine Abschrägung (26) umfasst, welche in dem Arm (11') teilweise das Licht reflektiert, das von der Beleuchtungsquelle (25) ausgestrahlt wird, und welche es teilweise in Richtung des Lichtleiters (8) durchlässt, durch eine Aussparung (19), die in der ersten Lichtwanne (9) ausgespart ist.

5. Geschwindigkeitsanzeigevorrichtung nach Anspruch 4, bei welcher der Lichtleiter (8) zum Streuen des Lichts gestaltet ist, das von der Beleuchtungsquelle (25) stammt, um die Skala (5) zu beleuchten, und um einen Teil dieses Lichts für die Beleuchtung des ersten Zeigers (4) durchzulassen.

6. Geschwindigkeitsanzeigevorrichtung nach Anspruch 5, bei welcher der Lichtleiter eine Konvexlinse umfasst, die Licht (8) leitet, welche eine kegelstumpfförmige Aussparung (20) zum Streuen eines Teils des von der Beleuchtungsquelle (25) emittierten Lichts in der Linse (8) umfasst, und welche einen Teil dieses Lichts in Richtung des ersten Zeigers (4) durchlässt.

7. Geschwindigkeitsanzeigevorrichtung nach einem der Ansprüche 1 bis 6, bei welcher die Beleuchtungsquelle mindestens eine Elektroluminiszenz-Diode (LED) (25) umfasst.

8. Geschwindigkeitsanzeigevorrichtung nach einem der Ansprüche 1 bis 7, die eine Geschwindigkeitsanzeigevorrichtung eines Armaturenbretts eines Kraftfahrzeugs (1) ist.

## Claims

1. Speedometer, comprising a front face (2) supporting a dial (5), a first pointer (4) indicating the effective speed, rotated in front of the dial (5), a second pointer (11) indicating a reference speed, rotated behind the dial (5) and including an end portion (22) visible at the periphery of the dial (5), and means (25) for illuminating the two pointers (4, 11) and the dial (5), said speedometer being **characterised in that** the illumination means comprise a single light source (25) common for the two pointers (4, 11) and the dial (5), and **in that** the support member (2) of the dial (15) is mounted on a light duct (8) mounted in a first light box (9), the first indicating pointer (4) conducts light, the second indicating pointer (11) conducts light, mounted in a second light box (10) to the rear of the first light box (9), a printed circuit board (12), whereon is mounted the light source (25), being provided to the rear of the second pointer (11).

2. Speedometer according to claim 1, wherein the two pointers (4, 11) are rotated by two concentric drive shafts (14, 17) rotated by a single motor (13) mounted on the printed circuit board (12).

3. Speedometer according to any one of claims 1 to 2, wherein the second pointer (11) comprises an arm (11'), the first end whereof comprises a hub (16) for receiving the drive shaft (14) thereof and the second end comprises a curved portion (22), the end whereof is visible at the periphery of the dial (5).

4. Speedometer according to claim 3, wherein the arm (11') of the second pointer (11) comprises, in the vicinity of the first end thereof, at least one inclined face (26) which partially reflects the light emitted by the light source (25) in the arm (11') and allows same to pass partially towards the light duct (8), via a recess (19) formed in the first light box (9).

5. Speedometer according to claim 4, wherein the light duct (8) is arranged to scatter the light from the light source (25), in order to illuminate the dial (5), and to allow a portion of this light to pass for the illumination of the first pointer (4).

6. Speedometer according to claim 5, wherein the light duct comprises a light-conducting convex lens (8), including a tapered recess (20) for scattering a portion of the light emitted by the light source (25) in the lens (8), and allowing a portion of this light to pass towards the first pointer (4).

7. Speedometer according to any one of claims 1 to 6, wherein the light source comprises at least one light-emitting diode (LED) (25).

8. Speedometer according to any one of claims 1 to 7, which is a speedometer of a motor vehicle dashboard (1).
